# EUROPÄISCHE PATENTANMELDUNG

(11) **EP 2 184 379 A1**
(43) Veröffentlichungstag der Anmeldung: **12.05.2010**
(21) Anmeldenummer: 08019364.2
(22) Anmeldetag: 05.11.2008
(51) Int. Cl.: C23F 1/44, F01D 5/00

(54) **Verfaren zur Entschichtung von Oberflächen von Bauteilen nur mittels Salzsäure**

(71) Anmelder: Siemens Aktiengesellschaft, 80333 München (DE)
(72) Erfinder: Birkner, Jens, 46045 Oberhausen (DE); Steinbach, Jan, Dr., 13353 Berlin (DE); Wilkenhöner, Rolf, Dr., 14532 Kleinmachnow (DE)

(57) **Zusammenfassung**

Die Entschichtung von Bauteilen, nachdem sie im Einsatz waren, wird oft mittels verschiedener Säurebäder und Salzschmelzen erreicht.

Das erfindungsgemäße Entschichtungsverfahren beinhaltet lediglich die Verwendung von Salzsäure.

## Beschreibung

Die Erfindung betrifft ein Verfahren zur Entschichtung von Oberflächen von Bauteilen.

Die Reinigung und Entschichtung der inneren, aber auch der äußeren Oberfläche von Gasturbinenschaufeln im Refurbishment ist eine wichtige Voraussetzung für nachfolgende Reparaturprozesse, wie z.B. beim Löten oder Schweißen. Verbleiben auf der Oberfläche des Bauteiles zu viele oxidische Rückstände oder höher aluminiumhaltige Restschichten der ursprünglichen Innen- bzw. Außenalitierung, so kann der nachfolgende Rissreinigungsprozess (HF-Cleaning oder FIC) nicht bis in die Rissspitzen vordringen, da zuviel Prozessgas zur Umsetzung der zurückgebliebenen Oberflächenoxide und Restschichten verbraucht wird. Dies ist insbesondere an der Innenoberfläche des Bauteils problematisch, da diese für herkömmliche mechanische Strahlprozesse weitestgehend unzugänglich ist und somit die im Betrieb entstandene Oxidschicht auf der Innenalitierung nicht mechanisch geschädigt oder abgetragen werden kann. Gemäß bisheriger Annahme schränkt dies wiederum den Zugang von chemischen Ätzmitteln zu höher aluminiumhaltigen Diffusionszonen ein.

Der angewandte Prozess aus einer Kombination aus einem geschmolzenen Salzbad und Säurebadreinigung reinigt die Innenoberfläche chemisch zunächst durch basischen Aufschluss der Oxide in starken Laugen und dann durch sauren Aufschluss der hoch aluminiumhaltigen Diffusionszone der Innenalitierung nur zum Teil bzw. nicht gründlich genug. Insgesamt drei verschiedene nasschemische Prozesse mit heißen, hochkonzentrierten Salzlösungen, Basen bzw. Säuren mit diversen Spül- und Trockengängen sind notwendig.

Es ist daher Aufgabe der Erfindung oben genanntes Problem in wirtschaftlicher und technischer Hinsicht zu vereinfachen.

Die Aufgabe wird gelöst durch ein Verfahren gemäß Anspruch 1, bei dem nur Salzsäure verwendet wird.

In den Unteransprüchen sind weiter vorteilhafte Maßnahmen aufgelistet, die beliebig miteinander kombiniert werden können, um weitere Vorteile zu erzielen.
Figur 1 zeigt eine Liste von Superlegierungen,
Figur 2 zeigt eine Turbinenschaufel.
Die Erfindung wird anhand von Beispielen näher erläutert.

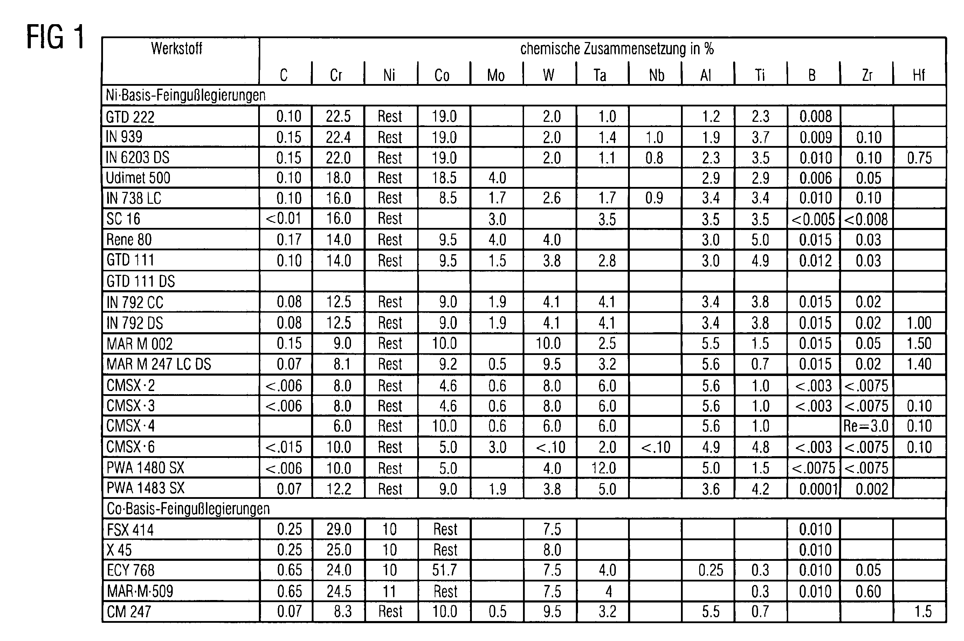

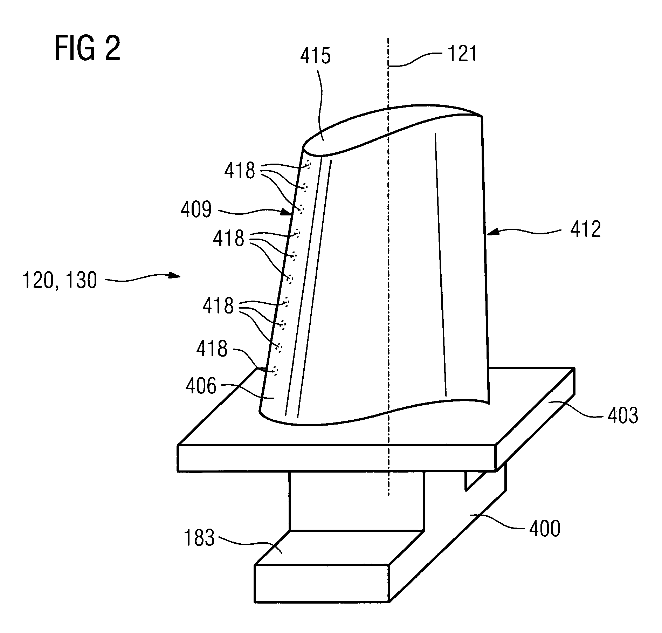

Turbinenschaufeln 120,130 (Fig. 2), die aus nickel- oder kobaltbasierten Superlegierungen (Fig. 1) bestehen, werden oft noch im Inneren alitiert, um sie im Inneren zu schützen, da das Innere der Turbinenschaufel 120, 130 mittels Heißdampf gekühlt wird. Die Alitierung stellt größtenteils oder vollständig eine Diffusionsschicht dar.

Bei der Wiederaufarbeitung ist es sinnvoll, die Alitierung zu entfernen, damit eine neue Alitierung durchgeführt werden kann oder um einfach beschädigte Schichtbereiche zu entfernen.

Die Reinigung des Innenraums oder allgemein der Oberfläche erfolgt erfindungsgemäß nur unter Verwendung von Salzsäure und nicht mit einem Säuregemisch oder auch nicht unter Verwendung oder Vorbehandlung mittels geschmolzener Salze (KOH, NaOH). Ebenso wird keine FIC-Reinigung zur Entfernung der Alitierung vorgenommen.

Die Konzentration der Salzsäure (HCl) beträgt vorzugsweise 15% bis 30% und ganz vorzugsweise 20% bis 25%. Vorzugsweise wird der Anteil von HCl in Gewichtsprozent berechnet. Vorzugsweise wird die Säurebehandlung bis zu achtmal, insbesondere mindestens zweimal durchgeführt. Vorzugsweise wird die Säurebehandlung 2- bis 6mal und ganz vorzugsweise 3- bis 4mal durchgeführt. Dies hängt von der Alitierung und der Einsatzdauer des Bauteils 120, 130 ab.

Die Behandlungsdauer im Säurebad beträgt insbesondere mindestens 2 Stunden, insbesondere 2 bis 2.5 Stunden.

Es werden durch die alleinige Ätzung in Salzsäure zwei energie- bzw. chemikalienintensive Prozessschritte aus dem bisherigen Prozess eingespart. In vorteilhafter Weise kann die Innenreinigung sogar zeitgleich mit der Außenreinigung (MCrAlY-Entschichtung) geschehen, was zusätzliche Synergien schafft.

Insbesondere kann dem chemischen Ätzprozess ein mechanischer Strahlprozess vorangestellt oder zwischen den zwei Säurebehandlungen der chemischen Ätzung angewendet werden. Vorzugsweise sind dass das Innenvakuumstrahlen (abrasives Mittel wird durch Luftunterdruck durch die Hohlräume des Bauteiles gesaugt) oder das Durchströmen des Bauteiles mit einem abrasiven, niedrigviskosen Fluid (bspw. Wasserstrahlreinigen mit abrasiven Partikeln). Ebenso vorzugsweise findet eine Wasserung zwischen den Säurebehandlungen statt.

Die Innenalitierung hat während des Betriebs bereits genügend viele Schädigungen (z.B. Risse, Abplatzungen etc) erfahren. Diese Schädigungen sind Angriffstellen für die Säure. An solchen Schadstellen kann sie auch noch intakte Innenaltierungsstellen hinterwandern, so dass diese vom Substrat (Nickel-Superlegierung) gelöst werden und abfallen.

Die Temperatur des Salzsäurebads beträgt vorzugsweise mindestens Raumtemperatur, ganz vorzugsweise 60°C bis 70°C.

Unter "Säurebehandlung" wird hier verstanden die Verweildauer des Bauteils im Säurebad bis es herausgenommen wird und bspw. gewässert, innengestrahlt, inspiziert (Entschichtungsgrad) wird usw. oder in ein neues frisches Säurebad eingetaucht wird.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 AI, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Entschichtung einer alitierten Oberfläche, insbesondere einer inneren Oberfläche eines Bauteils, insbesondere einer Turbinenschaufel (120, 130),
bei dem der alitierte Oberflächenbereich nur mit Salzsäure (HCl) chemisch behandelt wird.

2. Verfahren nach Anspruch 1,
bei dem die Konzentration der Salzsäure (HCl) zwischen 15% und 30% liegt,
insbesondere zwischen 20% und 25%.

3. Verfahren nach Anspruch 1 oder 2,
bei dem eine Behandlungsdauer mit der Salzsäure (HCl) mindestens 2 Stunden beträgt,
insbesondere 2 Stunden bis 2,5 Stunden.

4. Verfahren nach Anspruch 1, 2 oder 3,
bei dem die Säurebehandlung bis zu achtmal durchgeführt wird.

5. Verfahren nach Anspruch 4,
bei dem die Säurebehandlung 2- bis 6mal,
insbesondere 3- bis 4mal durchgeführt wird.

6. Verfahren nach Anspruch 4 oder 5,
bei dem zwischen den Säurebehandlungen eine Zwischenreinigung erfolgt.

7. Verfahren nach Anspruch 1,
bei dem Turbinenschaufeln (120, 130),
insbesondere innenalitierte Turbinenschaufeln, entschichtet werden.

8. Verfahren nach Anspruch 6,
bei dem ein mechanischer Prozess als Zwischenreinigung durchgeführt wird,
insbesondere ein Bestrahlungsprozess.

9. Verfahren nach Anspruch 1, 2, 3, 4, 5, 6, 7 oder 8,
bei dem die alitierte Oberfläche eine alitierte nickel- oder kobaltbasierte Superlegierung darstellt.

10. Verfahren nach Anspruch 1, 3, 4, 5, 6, 7, 8 oder 9,
bei dem die Temperatur der Salzsäure 60°C bis 70°C beträgt.

11. Verfahren nach Anspruch 1, 7 oder 9,
bei dem das Turbinenbauteil ein nickelbasiertes Substrat aufweist.

12. Verfahren nach Anspruch 1, 6 oder 8,
bei dem keine Salzschmelze zur Entschichtung verwendet wird.

13. Verfahren nach Anspruch 1, 2, 3, 4 oder 6,
bei dem die Säurebehandlung mindestens zweimal, insbesondere mindestens dreimal durchgeführt wird.
